(19) **Europäisches Patentamt / European Patent Office / Office européen des brevets**

(11) **EP 2 949 468 B1**

(12) **EUROPEAN PATENT SPECIFICATION**

(45) Date of publication and mention
of the grant of the patent:
**09.01.2019 Bulletin 2019/02**

(51) Int Cl.:
*C09J 7/29* *(2018.01)*          *B32B 27/32* *(2006.01)*
*B32B 7/12* *(2006.01)*          *B32B 27/08* *(2006.01)*

(21) Application number: **15167812.5**

(22) Date of filing: **15.05.2015**

(54) **USE OF PLASTIC FILMS FOR LABELS**

VERWENDUNG VON KUNSTSTOFFFOLIEN FÜR ETIKETTEN

UTILISATION DE FILMS PLASTIQUES COMME ETIQUETTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.05.2014 IT MI20141004**

(43) Date of publication of application:
**02.12.2015 Bulletin 2015/49**

(73) Proprietor: **Irplast S.p.A.
50053 Empoli (FI) (IT)**

(72) Inventors:
• **Di Costanzo, Carmelo
66034 Lanciano (Chieti) (IT)**
• **Pasquini, Gino
66030 Treglio (Chieti) (IT)**

• **Montagano, Angelo
66054 Vasto (Chieti) (IT)**
• **Soluri, Giascomo
50053 Empoli (Firenze) (IT)**
• **De Bartolo, Luca
46012 Bozzolo (Mantova) (IT)**
• **Cosi, Fausto
50121 Firenze (IT)**

(74) Representative: **Rossetti, Elena
BUGNION S.p.A.
Via di Corticella 87
40128 Bologna (IT)**

(56) References cited:
**EP-A1- 2 599 628          WO-A1-96/33864
US-A1- 2011 281 096**

**Description**

The present invention relates to the use of labels of plastic films for roll-fed application on containers having a circular horizontal section on high speed manufacturing lines, for example of the order of 8,000 packages/hour up to 75,000 packages/hour, preferably from 30,000 up to 60,000 and with a very low number of scraps on the application lines, ≤0,5%, preferably ≤0,1%, still more preferably ≤0,05%; the plastic film wound in rolls being obtained by a manufacturing process with improved film yields, the film yield being defined as the ratio by weight [(film produced wound in rolls)]/[raw materials used for film production].

These film rolls are also called extrusion mother rolls.

More in detail the present invention relates to labels for containers, preferably bottles, having the following characteristics: a variable diameter along the vertical axis, a convex lateral surface with different curvature radii in the zones of the container wherein the label is applied. More in detail, in correspondence of the zone of application of the upper edge (or upper side) of the label the curvature radius is higher than 74 mm, preferably higher than 75 mm, and in correspondence of the zone of application of the lower edge (or lower side) of the label higher than 72 mm, preferably higher than 73 mm. The label height, measured along the vertical axis of the bottle, is of about 60 mm, preferably about 55 mm; the distance between the lower edge of the label and the base of the container being about 12-14 mm.

The process of label application comprises the steps of cutting the labels from the film unwound from the roll, (the roll called also daughter roll, see below) and then coating the labels at register with adhesive along two bands perpendicular to the direction of the film unwinding. The adhesive used is an hot-melt adhesive that is made to adhere to the label by heating.

More specifically these plastic films have even very high lengths, higher than 1,000 meters, and are wound in rolls for easy industrial application.

The polypropylene labels at present available on the market for this application are obtained from sequentially stretched plastic films having a thickness of 40 $\mu$m and an heat shrinkage in MD of 22% that are subsequently wound in rolls.

From EP 1,074,593 in the name of the Applicant plastic film having adhesive bands are known, wherein the adhesive is applied transversally with respect to the direction of the tape unwinding. Said plastic film bands can be used to label containers.

In EP 1,862,518 in the name of the Applicant plastic film in rolls to be used in the high speed labelling processes, for example higher than 6,000 containers/hour up to 50,000 containers/hour, combined with scraps on the application lines lower than 2%, preferably lower than 1%, are described. The plastic film is made of heat shrinkable bioriented polypropylene polymers, with application of pressure sensitive adhesive according to transversal sectors with respect to the unwinding direction (i.e. longitudinal direction) of the film from the roll.

Patent application WO 96/2386 discloses multilayer heat shrinkable films wherein the core is based on an isotactic polypropylene homopolymer and on a modifier that reduces thereof crystallinity, such as for example atactic PP, syndiotactic PP, ethylene/propylene copolymers or LLDPE (linear low density polyethylene). The use of modifiers allows to increase heat shrinkage in MD direction.

Patent application EP 2,599,628 in the name of the Applicant describes the use of polyolefin-based films from rolls to prepare labels for roll-fed applications, to be used in high speed labelling machines, up to 75,000 containers/hour. The films, preferably multilayer films, have a thickness comprised between 14 $\mu$m to 20 $\mu$m, a flexural rigidity (N.mm) comprised between $0.5 \times 10^{-2}$ and $4.5 \times 10^{-2}$. The core is made of a propylene homopolymer containing extractables in n-hexane (50°C for two hours) lower than 10%. The film is not heat shrinkable and shows a dimensional stability, determined according to OPMA TC 4 standard at 130°C for 5 minutes in the air, in MD comprised between 0 and -10% and in TD between -4% and +4%.

There is a continuous need in the labelling industries to reduce the amount of plastic material used for producing labels due to environmental reasons. As a matter of fact efforts are undertaken to use a lower amount of plastic materials to reduce the energy consumption requested for label production. In this way the environmental sustainability is remarkably improved, as a lower amount of $CO_2$ is produced and therefore also a reduced greenhouse effect (GWP).

Furthermore at the end of their cycle of use, the labels must be disposed of. The market trend is to reduce the amount of packages and therefore also of labels to be recycled and/or disposed of. It is in fact well known that the disposal involves often high costs.

It should be considered that the transformation industries require to have available film rolls (called extrusion daughter rolls) having a length of the order of about 20,000 meters, from which to obtain printed and cut rolls having a maximum outer diameter of 600 mm for label roll-fed application. These are in fact the standard sizes requested in general for the labelling machines used at present.

The need was felt to use films to prepare labels for roll-fed applications for labelling containers having a circular horizontal section and a variable diameter along the vertical axis, said containers having a convex lateral surface and different curvature radii in the zones of the container wherein the label is applied: in the correspondence of the zone of application of the upper edge of the label the curvature radius is greater than 74 mm, preferably greater than 75 mm, and in the correspondence of the zone of application of the lower edge of the label the curvature radius is greater than 72 mm, preferably greater than 73 mm, the label height being about 60 mm, preferably about 55 mm, the distance between the lower edge of the label and the base of the container being 12-14 mm, the labelling machines working at a speed greater than 8,000 up to about 75,000 containers/hour, the films having a performance in label application comparable to the films available in the market for the same application, having for instance a thickness of 40 $\mu$m, see above, but with lower production costs with respect to the films at present used, that is with improved film yields, called also extrusion yields, greater than 95%, reaching also 96%, the film yields being defined as the ratio by weight [film produced wound in rolls]/[raw materials used for film production].

The solution found by the Applicant to the above technical problem is as hereinafter indicated.

It is an object of the present invention the use for preparing labels for roll-fed applications of an uniaxial heat shrinkable multilayer film, comprising at least three layers, wherein:

- the core comprises

   component a) selected from

      a1) isotactic crystalline polypropylene homopolymer and/or
      a2) a crystalline copolymer of propylene with ethylene, optionally containing an alpha-olefin and

   component b) selected from

      b1) amorphous atactic polypropylene and/or
      b2) an amorphous propylene-ethylene copolymer with at least one alpha-olefin having from 4 to 12 carbon atoms wherein, as % by weight with respect to the total amount of monomers, the total amount of ethylene plus alpha-olefin is comprised between 1 and 15%, ethylene between 0 and 10%, the alpha-olefin between 1 and 15%;

   the total amount of additive component b), i.e. b1) + b2), in parts by weight per 100 parts by weight of component a) (a1) and/or a2)) being comprised between 3 and 12, the amount (parts by weight) of component b1) is comprised between 0 and 12, that of component b2) is comprised between 0 and 12;
- the skin layers (or external layers) comprise a copolymer of propylene with ethylene and at least one $C_4$-$C_{12}$ alpha-olefin wherein, as % by weight with respect to the total amount of the monomers, the amount of ethylene plus alpha-olefin is comprised between 6 and 25%, ethylene being between 1 and 5%, the alpha-olefin between 5 and 25%;

the film obtainable by simultaneous biaxial stretching by means of linear synchronous motors, the heat shrinking in MD being comprised between 8 and 17% and in TD $\leq$2%, these values determined by the heat shrinking test OPMA TC 4 (Oriented Polypropylene Manufacturers' Association) (130°C - 5 minutes in the air);

the thickness of the multilayer film being comprised between 25 and 35 $\mu$m; the thickness of each skin layer being in the range from 0.5 to 1.5 $\mu$m;

the film yield, defined as the ratio by weight between [film produced wound in rolls]/[raw materials used for film production], being $\geq$ 95%;

as said above, these rolls are called extrusion mother rolls; the scraps on the line of label application to the containers $\leq$0.5%;

wherein the label application process on the containers comprises the following steps:

- unroll in MD direction of the multilayer plastic film roll;
- slit to size of the film for obtaining labels;
- application of hot melt adhesive bands on the side of the label facing the container, in the correspondence, respectively, of the leading edge and of the trailing edge of the label in MD direction, said adhesive bands being parallel to the vertical axis of the container, the container having a convex lateral surface and a circular horizontal section with a diameter variable along the vertical axis,
- application of the adhesivized label on the container convex lateral surface having a curvature radius greater than 74 mm in the correspondence of the zone wherein the upper edge of the label is applied, and greater than 72 mm in the correspondence of the zone wherein the lower edge of the label is applied; the label height, determined along the vertical axis of the container, being 60 mm and the distance between the lower edge of the label and the base of the container being 12-14 mm, the hot-melt adhesive being activated by means of a heat supplying device;
- label heat shrinking by passing the labelled container in a heat shrink tunnel at a temperature from 60°C to 300°C, thus obtaining a labelling adherent to the container that conforms to the convex lateral surface of the container;

the label application line working at a speed from 8,000 up to 75,000 containers/hour.

The lower edge of the label is the edge near to the base of the container.

Preferably the multilayer film of the invention has three layers.

Preferably as component a) isotactic polypropylene component a1) and as component b) amorphous atactic polypropylene component b1) are used.

The determination of the amount of isotactic polypropylene component a1) in admixture with the amorphous atactic component b1) (isotactic index) is carried out by extracting the sample with n-hexane under reflux, as indicated in the part "characterization" of the examples.

Generally the isotactic index of the polypropylene homopolymer component a1) of the core is comprised between 92 and 98, i.e. the amount of atactic polymer (amorphous) is generally comprised between 2 and 8%.

The propylene-ethylene copolymer component a2) of the core has an ethylene content (% by weight) comprised between 0.3% and 10%, preferably between 0.5 and 5%, more preferably 0.6 and 2%; the optional alpha-olefin ranging from 0 to 20%.

The copolymer a2), together with a crystalline part, may contain also an amorphous part. The amount of the amorphous part is determined by extraction of the polymer with xylene, as indicated in the method described under "characterization" of the examples.

Preferably in the propylene-ethylene-alpha-olefin copolymer component b2) the total amount of comonomers, as % by weight on the total monomer amount, is comprised between 2 and

10%, more preferably from 3 to 7%, the ethylene amount ranges from 1 to 5% by weight, the alpha-olefin preferably has from 4 to 8 carbon atoms and the amount of alpha-olefin is comprised between 2 and 10%, more preferably 3-5% by weight on the total monomer weight.

Preferably the amount of additive component b), as parts by weight/100 parts by weight component a), is comprised between 4 and 10, more preferably between 5-8.

In the propylene copolymer of the skin layers the alpha olefin has a chain length preferably from 4 to 8 carbon atoms.

The preferred alpha-olefins of the copolymers a2) and b2) and of the copolymers of the skin layers are selected from butene, hexene and octene, more preferably butene.

The external layers of the multilayer film can be the same or different, both as regards to the composition and relevant thickness, preferably they are the same. One of the skin layers is preferably surface treated, for example corona, flame plasma, etc. to make easier a good anchorage to the film of the printing inks and of the adhesive.

The external layers can comprise optional components selected from slip agents, anti-blocking agents, opacifiers. The core can optionally comprise antistatic agents, dyestuffs, etc.

When a greater covering effect (greater optical density and a lower transmittance of the film) is needed, a dyestuff made of a $TiO_2$-based master-batch can be used for providing white films printable from the outside.

As slip agents amides of higher aliphatic acids, esters of higher aliphatic acids, waxes, salts of fatty acids with metals and polydimethyl siloxanes can be mentioned. Thereof used amount is that conventional in the plastic films of the art.

As antiblocking agents inorganic compounds, such as silicon dioxide, clays, talc, calcium carbonate and the like, preferably available in the form of spheroidal-like particles, can be mentioned. As antiblocking agents amorphous silicone resins, for example crosslinked polysiloxanes substituted with hydrocarbons, more in detail polymonoalkyl-siloxanes having average particle diameter comprised between 0.5 and 20.0 $\mu$m and a tridimensional structure of the siloxane bonds, can be cited.

The relevant amount is generally comprised between about 0.1 and about 0.5% by weight referred to the weight of the external layer.

As antistatic agents aliphatic tertiary amines with saturated linear chains containing a $C_{10}$-$C_{20}$ aliphatic radical and substituted with ($\omega$-hydroxy-($C_1$-$C_4$) alkyl groups, can be mentioned. Among tertiary amines N,N-bis(2-hydroxyethyl) alkylamines containing $C_{10}$-$C_{20}$, preferably $C_{12}$-$C_{18}$ alkyl groups, can be in particular mentioned. The amount of antistatic agent is generally comprised from about 0.05% to about 0.2% with respect to the weight of the layer.

The heat shrinkage of the uniaxial film of the invention in MD is preferably comprised between 10 and 14% and in TD $\leq$1%.

Generally for labels heat shrink values very low in TD are preferred in order to obtain a label with dimensional stability in transversal direction.

Preferably the curvature radius of the surface of the container to be labelled in the correspondence of the zone of application of the upper edge of the label is greater than 75 mm and that in the correspondence of the zone of application of the lower edge of the label is greater than 73 mm.

Preferably the label height is 55 mm.

Preferably the thickness of the multilayer film is comprised between 28 and 32 μm, more preferably it is of about 30 μm. Preferably the thickness of each of the skin layers ranges from 0.6 to 1 μm.
Preferably the film yield of the process of production is ≥ 96%. The increase of film yield with respect to the films used in the prior art for the same application and having a thickness of 40 μm is of the order ≥ 0.5%, but it can also arrive to 1.5%.

This means that the hourly production of the film of the present invention is quite higher with respect to the prior art films, even considering yearly productions ranging only from 2,500 up to 4,000 tons. Therefore if a production increase from ≥ 0.5% up to 1.5% is obtained, this means on a year base that from 12,5 up to 40 tons more of the film can be produced. From an industrial point of view this represents a desired target for the labelling industries. If the yearly productions further increase, the increases in productivity are even higher.

The scraps on the line of label application to the containers are preferably ≤0.1%, more preferably ≤0.05%.

These scraps are defined as the ratio between the number of containers affixed with defective labels/number of total labelled containers produced.

It has been unexpectedly and surprisingly found that the labels of the uniaxial multilayer films of the present invention allow to obtain a low number of scraps during the application step. It has been found by the Applicant that the labels conform very well to the shape of the containers as defined above. In fact those defects occurring during label application such as for example wrinking, folding, creasing, curling, surprisingly and unexpectedly, result substantially absent in the application of the labels according to the present invention.

It has been unexpectedly and surprisingly found by the Applicant that although the flexural rigidity (N.mm) as defined later on under "Characterization" is lower compared with the commercial films having a thickness of 40 μm, during label application the films according to the present invention do not produce a higher number of scraps with respect to those obtained with the above 40 μm films. See the examples.

Preferably the temperature in the heat shrinking apparatus, for example an oven, ranges from 150°C to 210°C. The time of exposure of the containers to these temperatures preferably ranges from 1 to 3 seconds, preferably from 1 to 2 seconds.

The multilayer plastic films of the present invention have a density comprised between 0.850 and 0.950 g/cm$^3$.

The multilayer films are also endowed of good mechanical properties as shown by the tensile properties such as tensile strength at break, elongation at break and modulus measured according to ASTM D 882, and tearing resistance. The optical properties of the multilayer films of the present invention are particularly good, as shown by the gloss values and in particular the haze values.

As said, the multilayer films of the invention are obtainable with a process comprising coextrusion of the core and skin layers starting from the polymer granules, the films obtained by coextrusion are then biaxially oriented, as described further on. The films, having very high lengths, even of the order of 20,000 meters, are then wound in rolls. These rolls are called extrusion mother rolls (neutral film) and have a diameter up to 1000 mm and a width generally up to 6,000 mm. By cutting these rolls, the extrusion daughter rolls are obtained (neutral film), having preferably the same diameter as the extrusion mother rolls but a lower width from 400 to 1,500 mm.
In the subsequent transformation step the extrusion daughter rolls, (called in this step transformation mother rolls) are printed and cut to yield the rolls for the end use.

The process for producing the multilayer film of the present invention comprises a modulatable simultaneous horizontal stretching process carried out with the apparatus and technology as described in the basic patents USP 4,853,602 and USP 5,051,225, and subsequent patents describing this technology.
The process for producing the multilayer film comprises the following steps:

- coextrusion of a multilayer plate, having a thickness comprised from 0.5 mm to 4 mm, on a flat extrusion head;
- cooling of the plate on the surface of a chill roll cooled by dipping in a water bath, at a temperature from 5 to 35°C;
- plate heating by an infrared ray unit wherein the temperature of the IR panel surface ranges from 100° to 500°C, this step is carried out by using infrared rays;
- stretching and orientation of the plate by a simultaneous orientation process, by holding the edges of the plate, having an higher thickness than the plate, with a series of pliers or clamps independently driven by linear synchronous induction motors, the set of pliers/clamps sliding on divergent stretching tracks; the linear synchronous induction motors are fed with alternate currents, thereof phases and frequencies being modulated so that the pliers/clamps follow a pre-programmed linear speed profile in order to obtain the requested stretching ratios in MD;
wherein the MD stretching ratios are a function of the linear longitudinal speed profile and the TD stretching ratios are regulated by the distance/divergence between the stretching rails;
- the stretching frame comprises one or more sections inside an oven wherein temperatures are comprised from 145° to 175°C;
- the MD longitudinal stretching ratios being comprised from 4:1 to 9:1 and the TD transversal stretching ratios from 3:1 to 8:1.
- final heat setting in TD carried out by converging the stretching rails in one or more sections of the stretching frame, the temperatures of this step being comprised between 135°C and 160°C.

In a first approximation, the longitudinal stretching ratio can be considered equal to the ratio between the film speed at the outlet from the stretching frame and its inletting speed into the frame. In relation to the set up of the stretching apparatus, this ratio is equivalent to the ratio between the frequency of the alternate current fed to the linear electric motors at the outlet of the stretching frame and the frequency of the alternate current fed to the linear motors at the inlet of the stretching frame. Preferably the MD longitudinal stretching ratios are comprised between about 5.5:1 and 7:1.

The transversal stretching ratio can be considered in a first approximation equal to the ratio between the width of the film at the outlet of the stretching frame and the width of the film at the inlet of the stretching frame.

It is another object of the present invention a process for the application on containers of the labels of the plastic films of the present invention comprising the following steps:

- unroll in MD of the multilayer plastic film roll;
- slit to size of the film for obtaining labels;
- application of hot melt adhesive bands on the side of the label facing the container, in correspondence, respectively, of the leading edge and of the trailing edge of the label in MD, said adhesive bands being parallel to the vertical axis of the container, the container having a convex lateral surface and a circular horizontal section with a diameter variable along the vertical axis,
- application of the adhesivized label on the convex lateral surface of the container having a curvature radius greater than 74 mm in the correspondence of the zone wherein the upper edge of the label is applied and greater than 72 mm in the correspondence of the zone wherein the lower edge of the label is applied; the label height, determined along the vertical axis of the container being 60 mm and the distance between the lower edge of the label and the base of the container being 12-14 mm, the hot-melt adhesive being activated by means of a heat supplying device;
- label heat shrinking by passing the labelled container in a heat shrink tunnel at a temperature from 60°C to 300°C, obtaining an adherent labelling to the container that conforms to the convex lateral surface of the container;

the label application line working at a speed from 8,000 up to 75,000 containers/hour.

The multilayer film of the invention is supplied in rolls for direct industrial application, the so called roll fed application.

It has been unexpectedly and surprisingly found that by using conventional labelling machines for high speed applications, the multilayer films of the present invention are very fast unrolled from the rolls without jamming on the labelling line.

The labels are obtained by cutting the printed multilayer film unwound from the rolls, on the roll-fed line.

The length of the adhesivized part of the label, determined in the longitudinal direction (MD) of the tape is generally lower than or equal to 25%, preferably lower than or equal to 15% with respect to the total length of the label. The cut pitch of the label is preferably comprised between about 10 cm and 1 m in MD.

It is to be noted that the production of these films is remarkably advantageous compared with that of the films having a thickness of 40 μm described in the prior art for the same applications. As a matter of facts these films are generally obtained by sequential stretching in MD and then in TD, followed by a final stretching in MD.

Unexpectedly and surprisingly by using the simultaneous stretching LISIM machines, the amount of energy used for producing the multilayer films of the present invention is lower than that requested for producing the prior art films having 40 μm thickness. This is a remarkable advantage from an industrial point of view, as the Applicant has made available to the application industries rolls made of a film that, the weight being equal, allow to produce a higher number of labels than with the above prior art films, and besides by using a process requesting less energy, although maintaining the scraps in application at very low levels, comparable to that of the 40 μm films but with improved film yields, in particular for film production campaign of the order of 50-100 tons.

The labelled containers, for example bottles, obtainable with the roll-fed process of the invention meet the specifications requested by customers. In particular, as said, the heat shrunk label conforms completely and uniformly to the bottle shape. Furthermore, on the part of the label corresponding to the overlap of the two vertical edges there are no defects, due, for instance, to local unsticking and consequent film partial lifting, or folding caused by the adhesive. The Applicant points out that with the films of the present invention remarkable advantages from an industrial point of view are obtained, as the rolls of the films of the present invention for use in roll-fed application having a same diameter of the rolls of commercial films having 40 μm thickness, allow to obtain a lower impact on transport and storage costs and also on production costs.

As the length of the film unwound from rolls having the same external diameter in the case of the films of the present invention is higher than for the prior art films (see above). Therefore on the labelling lines the roll substitution steps are reduced and there are fewer machine stops and consequently higher yields are obtained.

The following Examples are given for illustrative and not limitative purposes of the present invention.

<u>EXAMPLES</u>

<u>CHARACTERIZATION</u>

<u>Determination of the isotactic polypropylene content in polypropylene (isotacticity index)</u>

The determination of the isotactic polypropylene in admixture with the amorphous portion is carried out by extracting for two hours the sample with n-hexane at 50°C according to FDA 177 1520 Standard. The insoluble fraction is recovered and weighed. The isotactic index is given by the formula:

$$\frac{\text{weight of the insoluble fraction in hexane X100}}{\text{Sample weight}}$$

<u>Determination of the soluble fraction in xylene of the propylene copolymers</u>

2 g of polymer are dissolved in 250 cm$^3$ of xylene at 135°C under stirring. After 20 minutes the solution is allowed cool, while continuing stirring, down to the temperature of 25°C. After 30 minutes the mixture is filtered and the solid is separated from the organic solvent. The solvent is removed by evaporation in a nitrogen stream. The obtained residue is dried under vacuum at 80°C up to a constant weight. The weight residue corresponds to the amount of the soluble fraction of the propylene copolymer in xylene (amorphous fraction). The weight multiplied by 100 and divided by the starting polymer weight (2 g) gives the percentage of the amorphous part of the polymer.
By using this same calculation and substituting to the weight of the soluble fraction in xylene that of the solid recovered by the first filtration and dried, the percentage of the crystalline part of the polymer is obtained.

<u>Melt Flow Index (MFI)</u>

The melt flow index was determined at 230°C for 10 min with a 2.16 Kg load according to ISO 1133.

<u>Determination of the film heat shrink</u>

The film heat shrink is determined according to OPMA TC 4 standard by heating a sample 20 cm x 1 cm at 130°C per 5 minutes in the air.
The heat shrink in MD or in TD is calculated with the following formula:

$$\frac{(L_1 - L_2)\ X\ 100}{L_1}$$

wherein:

$L_1$ is the film length before the heat treatment,
$L_2$ is the film length after heat treatment.

Heat shrinking can also be indicated with the number obtained with the above formula preceded by a negative sign -.
If the label dilates by heating, the dilation values in MD or in TD, preceded by a positive sign +, are determined by the following formula:

$$\frac{(L_2 - L_1)\ X\ 100}{L_1}$$

wherein $L_1$ and $L_2$ have the above mentioned meanings.

<u>Young modulus (elastic modulus)</u>

The Young modulus, or elastic modulus (N/mm$^2$) has been determined according to ASTM D 882 standard both in MD direction and in TD direction. The modulus is determined on a film sample of the extrusion mother roll (t=0) and the determination repeated after 48 hours.

Elongation at break and tensile strength at break

The elongation at break and tensile strength at break of the film have been determined according to ASTM D 882.

Flexural rigidity

The flexural rigidity, or rigidity (N.mm), is given by the following formula:

$$R = [E.d^3]/12(1-\mathbf{v}^2)$$

wherein R is the rigidity, E the Young modulus and d is the thickness in mm. In the flexural rigidity calculation $\mathbf{v}^2$ can also be omitted as it reduces to a very small number.

HAZE

The Haze values were determined according to ASTM D 1003.

GLOSS

Gloss was determined according to the ASTM D 2457 standard.

Determination of the film yield

The film yield was determined according to the following formula:

$$\frac{P2 \times 100}{P1}$$

wherein:

P1 is the weight of the starting polymeric material
P2 is the weight of the obtained film.

Determination of the friction coefficient (COF)

The friction coefficient was determined by ASTM D 1894 method.

Determination of scraps during application

The % scraps in application were determined as the ratio [number of containers with defective labels]/[number total labelled containers]. Defective labels are those labels showing, for example, wrinkling, folding, creasing, curling or when in the part corresponding to the overlapping of the two label edges local unsticking with consequent partial film lifting occurs.

EXAMPLE 1

The film was obtained by coextruding through a flat die three polymeric layers corresponding to a core layer and to two skin layers wherein, respectively, the composition of the core and of the skin layers was the following:
The core layer:

95% by weight of isotactic propylene homopolymer with isotacticity index 95%, and
5% of a propylene-ethylene-butene elastomeric copolymer, wherein, as % by weight based on the total weight of the monomers, the amount of ethylene and butene is 12%, ethylene 4% and butene 8%.

The external layers were made of heat sealable random ethylene/propylene/butene terpolymers, wherein the sum of the two comonomers of the terpolymers, expressed as % by weight with respect to the total weight of the monomers, is 9%.

The core polymer and the polymers of the external layers were coextruded to obtain a final plate wherein the core polymer formed the central layer and the polymers of the external layers form the skin layers. The temperature of the flat extrusion die was 245°C. The so obtained plate was cooled on a chill roll kept at a temperature of 30°C by fluxing water into the interspace of the chill roll, which was dipped in a water bath having the temperature of 35°C. The chilled plate was transferred into an infrared heating battery wherein the temperature of the heating panel surface was comprised between 230°C and 400°C. Then the plate entered a simultaneous stretching oven Lisim®, equipped with linear synchronous motors wherein the temperature values being as it follows:

In the preheating zone: 171°C;
In the stretching zone: from 153°C up to 149°C;
In the stabilization zone in TD (annealing step in TD): from 155°C to 140°C;
The MD and TD stretching ratios were respectively 6.3:1 (MD) and 6.2:1 (TD). One surface of the obtained film was subjected to flame treatment. The value of the surface tension > 44 dyne/cm.

The film thickness was of 29.96 $\mu$m, the thickness of the central layer 28.54 $\mu$m and of each of the two skin layers 0.71 $\mu$m.

In the campaign 100 tons of film were produced. In a campaign even up to 200 ton film can be produced.

The film yield was 95.4%.

The mechanical, optical and shrinking properties in MD/TD are reported in Table 1.

The film was then wound in rolls.

EXAMPLE 2 comparative

This Example has been devised by the Applicant, but it is not described in the prior art.

Example 1 was repeated to prepare a film having thickness of 40 $\mu$m, by coextruding through a flat heat three polymeric layers wherein, respectively, the composition of the core and of the skin layers was equal to that of the film of example 1.

The core polymer and the polymers of the skin layers were coextruded through a flat die at a temperature of 245°C. The plate was then chilled and in the next step heated as in Example 1. Then the plate underwent a simultaneous stretching by inletting a Lisim® oven apparatus equipped with linear synchronous motors wherein the t3emperatures were as it follows:

In the preheating zone: as in Example 1;
In the stretching zone: from 151°C up to 147°C;
In the stabilization zone in TD (annealing): from 147°C to 131°C;
the MD and TD stretching ratios are the same as in Example 1. One surface of the so obtained film was subjected to flame treatment, the value of the surface tension was > 44 dyne/cm. The film thickness was of 39.71 $\mu$m, the thickness of the central layer being of 38.27 $\mu$m and of each of the skin layers 0.72 $\mu$m.

In the campaign 100 tons of film were produced.

The film yield is 94.8%.

The mechanical, optical and shrinking properties in MD/TD are reported in Table 1.

Comments

The data reported in Table 1 show that the flexural rigidity of the film of Example 1 according to the present invention is lower than the film of Example 2 comparative. Furthermore it is observed that the Haze value is improved in the film of Example 1 with respect to that of the comparative Example.

EXAMPLE 3

Example 1 was repeated but using a core made of isotactic polypropylene having an isotacticity index of 94% (atactic 6%) for preparing a film having thickness 32 $\mu$m.

The outer layers had the same composition of the corresponding layers of the film of example 1.

The core polymer and the polymers of the skin layers were coextruded through a flat die at a temperature of 245°C to form a plate with three layers (core and skin layers), the outer layers are the skin layers. The so obtained plate was chilled and then heated again as described in Example 1. Then the plate entered the simultaneous stretching machine Lisim®, equipped with linear synchronous motors wherein the temperatures of the preheating zone, of the stretching zone and of the stabilization zone in TD were as in Example 1.

The same MD and TD stretching ratios used of Example 1 have been used in the simultaneous stretching step. One surface of the so obtained film underwent a flame treatment. The value of the surface tension was >44 dyne/cm.

The film thickness was of 32 $\mu$m.

The thickness of the central layer was 30.4 $\mu$m and of each of the skin layers 0.8 $\mu$m.

The film yield resulted comparable with that obtained in Example 1.

TABLE 1

| Properties | Ex. 1 | Ex. 2 comp |
|---|---|---|
| Haze (%) | 1.55 | 2.14 |
| Gloss | 89 | 86 |
| Tensile strength at break MD (N/mm$^2$) | 174 | 176 |
| Tensile strength at break TD (N/mm$^2$) | 192 | 206 |
| Elongation at break MD (%) | 95 | 92 |
| Elongation at break TD (%) | 92 | 81 |
| Elastic modulus MD at t=48h (N/mm$^2$) | 2896 | 2454 |
| Flexural rigidity (x 10$^{-2}$) (n.mm) | 7.8 | 15.4 |
| Elastic modulus TD a t=48h (N/mm$^2$) | 2812 | 2539 |
| Shrinking MD (%) 135°C /7min | -16.55 | -23.01 |
| Shrinking TD (%)135°C /7min | 0.75 | -2.84 |

## APPLICATION EXAMPLES

### EXAMPLE 4

The film roll of example 1 was used. On the application line the film was unwound and cut to form labels having 55 mm height (TD direction) and 144 mm length (MD direction). On the label two hot melt adhesive bands were applied in correspondence of the leading and trailing edge with respect to the unwinding direction in MD of the roll. The containers to be labelled were bottles of 100 ml volume having a circular section on an horizontal plane and a variable diameter along their vertical axis, the maximum diameter being of 43.7 mm. The containers have a convex shape in the zone of the label application; in particular in the zone wherein the upper edge of the label is applied, the curvature radius is 75 mm and of 73.7 mm in the zone of application of the lower edge of the label. The distance between the lower edge of the label and the base of the container is 12.5 mm. Line speed was 55, 000 bottles/hour.

Label heat shrinking after application to the containers was carried out into a heat shrinking device wherein the temperature was kept in the range from 200 to 167°C. The time of exposure of each container at these temperatures was 1.5 seconds.

The application line operated for 3 hours. The percentage of scraps was lower than 0.1%. It was noted that the labels were perfectly slit and did not show defects as wrinkling, creasing, folding, curling, local unsticking or partial lifting of the film in the part corresponding to the overlapping of the two label (vertical) edges.

### EXAMPLE 5 Comparative

Example 4 was repeated but using the film of Example 2 comparative.

The obtained results overlapped those of Example 4 However it is to be noted that this film yield was lower than in Example 4.

### EXAMPLE 6

Example 4 was repeated but using the film of Example 3. Scraps were about 0.2%.

**Claims**

1. Use for preparing labels for "roll-fed" applications of an uniaxial heat shrinkable multilayer film, comprising at least three layers, wherein:

   - the core comprises

   component a) selected from

   a1) isotactic crystalline polypropylene and/or
   a2) a crystalline copolymer of propylene with ethylene, and

   component b) selected from

   b1) amorphous atactic polypropylene and/or
   b2) an amorphous propylene-ethylene copolymer with at least one alpha-olefin having from 4 to 12 carbon atoms wherein, as % by weight with respect to the total amount of monomers, the amount of ethylene plus alpha-olefin is comprised between 1 and 15%, ethylene between 0 and 10%, alpha-olefin between 1 and 15%;
   the amount of additive component b), b1) + b2) in parts by weight per 100 parts by weight of component a) being comprised between 3 and 12, the amount (parts by weight) of component b1) is comprised between 0 and 12, that of component b2) is comprised between 0 and 12;

   - the skin layers comprise a copolymer of propylene with ethylene and at least one $C_4$-$C_{12}$ alpha-olefin wherein, as % by weight with respect to the amount of the monomers, the amount of ethylene plus alpha-olefin is comprised between 6 and 25%, ethylene being between 1 and 5%, the alpha-olefin between 5 and 25%;
   - the film obtainable by simultaneous biaxial stretching by means of linear synchronous motors, the heat shrinking in MD being comprised between 8 and 17% and in TD $\leq$2, these values determined by heat shrinking test OPMA TC 4 (Oriented Polypropylene Manufacturers' Association) (130°C - 5 minutes in the air);
   - the thickness of the multilayer film being comprised between 25 and 35 pm; the thickness of each skin layer being in the range from 0.5 to 1.5 pm;
   - the film yield, defined as the ratio between [weight of film produced wound in rolls]/[weight of the raw materials used for film production] being $\geq$ 95%;
   - the scraps on label application line $\leq$ 0.5%; wherein the label application process on the containers comprises the following steps:
   - unroll in MD direction of the multilayer plastic film roll;
   - slit to size of the film for obtaining labels;
   - application of hot melt adhesive on the side of the label facing the container, in the correspondence, respectively, of the leading edge and of the trailing edge of the label in MD direction, the container having a convex lateral surface and a circular horizontal section with a diameter variable along the vertical axis,
   - application of the adhesivized label on the container convex lateral surface having a curvature radius greater than 74 mm in the correspondence of the zone wherein the upper edge of the label is applied and greater than 72 mm in the correspondence of the zone wherein the lower edge of the label is applied, the label height, determined along the vertical axis of the container, being 60 mm and the distance between the lower edge of the label and the base of the container being 12-14 mm, the hot-melt adhesive being activated by means of a heat supplying device;
   - label heat shrinking by passing the labelled container in a heat shrink tunnel at temperature from 60°C to 300°C, thus obtaining a labelling adherent to the container and conforming to the convex lateral surface of the container;

   the label application line working at a speed from 8,000 up to 75,000 containers/hour.

2. Use according to claim 1 wherein the film comprises three layers.

3. Use according to claims 1-2 wherein as component a) isotactic crystalline polypropylene component a1) is used.

4. Use according to claim 3 wherein as component b) amorphous atactic polypropylene component b1) is used.

5. Use according to claims 1-4 wherein the propylene-ethylene copolymer component a2) of the core has an ethylene content (% by weight) comprised between 0.3% and 10%.

6. Use according to claims 1-5, wherein component a2) of the core further comprises an alpha-olefin in an amount (% by weight)ranging from 0 to 20%.

7. Use according to claims 1-6 wherein in component b2) the amount of comonomers as % by weight on the total monomer amount is comprised between 2 and 10%, the ethylene amount between 1 and 5%, the alpha-olefin has from 4 to 8 carbon atoms and the alpha-olefin amount ranges from 2 to 10%.

8. Use according to claims 1-7 wherein the amount of additive component b) in the core, expressed as parts by weight/100 parts by weight component a), is comprised between 4 and 10.

9. Use according to claims 1-8 wherein in the propylene copolymer of the skin layers the alpha olefin has from 4 to 8 carbon atoms.

10. Use according to claims 1-9 wherein the alpha-olefins of the copolymers a2) and b2) of the core and of the copolymers of the skin layers are selected from butene, hexene and octene.

11. Use according to claims 1-10 wherein the external layers are equal to each other.

12. Use according to claims 1-11 wherein one of the external layers is surface treated.

13. Use according to claim 12 wherein the skin layers comprise components selected from slip agents, anti-blocking agents, opacifiers and the core comprises antistatic agents, dyestuffs.

14. Use according to claims 1-13 wherein the heat shrinkage of the film in MD is comprised between 10 and 14% and in TD $\leq$1%.

15. Use according to claims 1-14 wherein the curvature radius of the lateral surface of the container in the correspondence of the zone wherein the upper edge of the label is applied is higher than 75 mm and in the correspondence of the zone wherein the lower edge of the label is applied is higher than 73 mm.

16. Use according to claims 1-15 wherein the thickness of the multilayer film is comprised between 28 and 32 pm.

17. Use according to claims 1-16 wherein the thickness of the multilayer film is of 30 $\mu$m.

18. Use according to claims 1-17 wherein the scraps on the label application line are $\leq$0.1%.

19. A process for producing the multilayer film of claims 1-18 comprising the following steps:

- coextrusion of a multilayer plate, having a thickness comprised between 0.5 mm and 4 mm, on a flat extrusion head;
- cooling of the plate on the surface of a chill roll cooled by dipping it in a water bath, at a temperature from 5 to 35°C;
- plate heating by an infrared ray unit wherein the temperature of the surface of IR panels ranges from 100° to 500°;
- stretching and orientation of the plate by a simultaneous orientation process by holding the edges of the plate, having an higher thickness than the plate, with a series of pliers or clamps independently driven by linear synchronous induction motors, the set of pliers/clamps sliding on divergent stretching rails; the linear synchronous induction motors are fed with alternate currents, thereof phases and frequencies being modulated so that the pliers/clamps follow a pre-programmed linear speed profile in order to obtain the requested stretching ratios in MD;
wherein the MD stretching ratios are a function of the linear longitudinal speed profile and the TD stretching ratios are regulated by the distance/divergence between the stretching rails;
- the stretching frame used for the film stretching steps comprises one or more sections in-side an oven having temperatures comprised between 145°C and 175°C;
- the MD longitudinal stretching ratios being comprised from 4:1 to 9:1 and the TD transversal stretching ratios from a3:1 to 8:1;
- final heat setting in TD carried out by converging the stretching rails in one or more sections of the stretching frame at temperatures of 135°C-160°C.

20. Process according to claim 19 wherein the MD stretching ratios are comprised from 5.5: 1 to 7:1.

21. A process for the application on containers of the labels of the plastic films of claims 1-18 comprising the following steps:

- unroll in MD the multilayer plastic film roll;
- slit to size of the film for obtaining labels;
- application of hot melt adhesive bands on the side of the label facing the container, in correspondence, respectively, of the leading edge and of the trailing edge of the label in MD, said adhesive bands being parallel to the vertical axis of the container, the container having a convex lateral surface and a circular horizontal section with a diameter variable along the vertical axis,
- application of the adhesivized label on the convex lateral surface of the container having a curvature radius greater than 74 mm in the correspondence of the zone wherein the upper edge of the label is applied, and greater than 72 mm in the correspondence of the zone wherein the lower edge of the label is applied; the label height, determined along the vertical axis of the container being 60 mm and the distance between the lower edge of the label and the base of the container being 12-14 mm, the hot-melt adhesive being activated by means of a heat supplying device;
- label heat shrinking by passing the labelled container in a heat shrink tunnel at a temperature from 60°C to 300°C, obtaining an adherent labelling to the container that conforms to the convex lateral surface of the container;

the label application line working at a speed from 8,000 up to 75,000 containers/hour.

**Patentansprüche**

1. Verwendung zur Vorbereitung von Etiketten für "Rollfed"-Anwendungen von einer einachsigen, wärmeschrumpfbaren Mehrschichtfolie, umfassend mindestens drei Schichten, wobei:

- der Kern

Komponente a) ausgewählt aus

a1) isotaktischem kristallinem Polypropylen und/oder
a2) einem kristallinen Copolymer von Propylen mit Ethylen,

Komponente b) umfasst, ausgewählt aus

b1) amorphem ataktischem Polypropylen und/oder
b2) einem amorphen Propylen-Ethylen-Copolymer mit mindestens einem alpha-Olefin aufweisend 4 bis 12 Kohlenstoffatomen wobei, in Gew.-%, bezogen auf die Gesamtmenge an Monomere, die Menge an Ethylen plus alpha-Olefin zwischen 1 und 15%, Ethylen zwischen 0 und 10%, alpha-Olefin zwischen 1 und 15% liegt;

wobei die Menge an Additiv-Komponente b), b1) + b2) in Gewichtsteilen pro 100 Gewichtsteile der Komponente a) zwischen 3 und 12, die Menge (Gewichtsteile) der Komponente b1) zwischen 0 und 12, die der Komponente b2) zwischen 0 und 12 liegt;

- die Hautschichten umfassen ein Copolymer von Propylen mit Ethylen und mindestens ein $C_4$-$C_{12}$ alpha-Olefin, wobei, in Gew.-%, bezogen auf die Menge an Monomere, die Menge an Ethylen plus Alpha-Olefin zwischen 6 und 25 %, Ethylen zwischen 1 und 5 %, das Alpha-Olefin zwischen 5 und 25 % liegt;

die Folie, die durch gleichzeitiges biaxiales Strecken mittels Linearsynchronmotoren erhältlich ist, wobei die Wärmeschrumpfung in MD zwischen 8 und 17% und in TD $\leq 2$ liegt, wobei diese Werte durch den Wärmeschrumpftest OPMA TC 4 (Oriented Polypropylene Manufacturers' Association) (130 °C - 5 Minuten in der Luft) bestimmt werden; wobei die Dicke der Mehrschichtfolie zwischen 25 und 35 $\mu$m liegt, wobei die Dicke jeder Hautschicht im Bereich von 0,5 bis 1,5 $\mu$m liegt;

wobei die Folienausbeute, definiert als das Verhältnis zwischen [Gewicht der in Rollen gewickelten Folie]/[Gewicht der für die Folienherstellung verwendeten Rohstoffe], ≥95% ist;

die Abfälle auf der Etikettieranlage ≤0,5%;

wobei das Etikettierverfahren auf den Behältern die folgenden Schritte umfasst:

- Abwickeln in MD-Richtung der mehrschichtigen Kunststoff-Folienrolle;
- Trennen der Folie auf die Größe, um Etiketten zu erhalten;
- Aufbringen des Schmelzklebers auf die dem Behälter zugewandte Seite des Etiketts jeweils an der Vorderkante bzw. der Hinterkante des Etiketts in MD-Richtung, wobei der Behälter eine konvexe Seitenfläche und einen kreisförmigen horizontalen Querschnitt mit einem entlang der vertikalen Achse veränderlichen Durchmesser aufweist,
- Aufbringen des Klebeetiketts auf die konvexe Seitenfläche des Behälters mit einem Krümmungsradius größer als 74 mm am Bereich, in dem die obere Kante des Etiketts aufgebracht ist, und größer als 72 mm am Bereich, in dem die untere Kante des Etiketts aufgebracht ist, wobei die Etikettenhöhe, bestimmt entlang der vertikalen Achse des Behälters, 60 mm beträgt und der Abstand zwischen der unteren Kante des Etiketts und dem Boden des Behälters von 12 bis 14 mm beträgt, wobei der Schmelzkleber mittels einer Wärmezuführvorrichtung aktiviert wird;
- Warmschrumpfen des Etiketts, indem der etikettierte Behälter in einem Schrumpftunnel bei einer Temperatur von 60 °C bis 300 °C durchgeleitet wird, wodurch eine haftende Etikettierung am Behälter erreicht wird und der konvexen Seitenfläche des Behälters entspricht;

wobei die Etikettieranlage mit einer Geschwindigkeit von 8.000 bis 75.000 Behältern/Stunde arbeitet.

2. Verwendung nach Anspruch 1, wobei die Folie drei Schichten umfasst.

3. Verwendung nach Anspruch 1-2, wobei als Komponente a) isotaktisches kristallines Polypropylen Komponente a1) verwendet wird.

4. Verwendung nach Anspruch 3, wobei als Komponente b) amorphes ataktisches Polypropylen Komponente b1) verwendet wird.

5. Verwendung nach Anspruch 1-4, wobei die Propylenethylen-Copolymer-Komponente a2) des Kerns einen Ethylengehalt (Gew.-%) zwischen 0,3 und 10% aufweist.

6. Verwendung nach Anspruch 1-5, wobei Komponente a2) des Kerns ein alpha-Olefin in einer Menge (Gew.-%) im Bereich von 0 bis 20% umfasst.

7. Verwendung nach den Ansprüchen 1-6, wobei in Komponente b2) die Menge an Comonomeren in Gew.-% auf die Gesamtmonomermenge zwischen 2 und 10%, die Ethylenmenge zwischen 1 und 5% liegt, das Alpha-Olefin 4 bis 8 Kohlenstoffatome aufweist und die Alpha-Olefinmenge im Bereich zwischen 2 und 10% liegt.

8. Verwendung nach Anspruch 1-7, wobei die Menge an Additiv-Komponente b) im Kern, ausgedrückt als Gewichtsteile/100 Gewichtsteile Komponente a), zwischen 4 und 10 liegt.

9. Verwendung nach Anspruch 1-8, wobei im Propylencopolymer der Hautschichten das alpha-Olefin 4 bis 8 Kohlenstoffatome aufweist.

10. Verwendung nach Anspruch 1-9, wobei die alpha-Olefine der Copolymere a2) und b2) des Kerns und der Copolymere der Hautschichten aus Buten, Hexen und Octen ausgewählt werden.

11. Verwendung nach Anspruch 1-10, wobei die äußeren Schichten gleich einander sind.

12. Verwendung nach Anspruch 1-11, wobei eine der äußeren Schichten oberflächenbehandelt ist.

13. Verwendung nach Anspruch 12, wobei die Hautschichten Komponenten umfassen, die aus Gleitmitteln, Antiblockmitteln, Trübungsmitteln ausgewählt werden und der Kern antistatische Mittel, Farbstoffen umfasst.

**14.** Verwendung nach Anspruch 1-13, wobei die Wärmeschrumpfung der Folie in MD zwischen 10 und 14% und in TD ≤ 1% liegt.

**15.** Verwendung nach Anspruch 1-14, wobei der Krümmungsradius der Seitenfläche des Behälters am Bereich, in dem die obere Kante des Etiketts aufgebracht ist, höher als 75 mm ist und am Bereich, in dem die untere Kante des Etiketts aufgebracht ist, höher als 73 mm ist.

**16.** Verwendung nach Anspruch 1-15, wobei die Dicke der Mehrschichtfolie zwischen 28 und 32 μm liegt.

**17.** Verwendung nach Anspruch 1-16, wobei die Dicke der Mehrschichtfolie 30 μm beträgt.

**18.** Verwendung nach Anspruch 1-17, wobei die Abfälle auf der Etikettieranlage ≤ 0,1% sind.

**19.** Verfahren zur Herstellung der Mehrschichtfolie der Ansprüche 1 bis 18, umfassend die folgenden Schritte:

- Coextrusion einer Mehrschichtplatte mit einer Dicke zwischen 0,5 mm und 4 mm auf einem flachen Extruderkopf;
- Abkühlen der Platte auf der Oberfläche einer Kühlwalze, die durch Eintauchen in ein Wasserbad bei einer Temperatur von 5 bis 35 °C abgekühlt wird;
- Heizen der Platte durch eine Infrarot-Strahlungseinheit, wobei die Oberflächentemperatur der IR-Paneele im Bereich von 100° bis 500 °C liegt.
- Strecken und Ausrichten der Platte durch ein gleichzeitiges Ausrichtungsverfahren durch Halten der Kanten der Platte, die eine größere Dicke als die Platte aufweisen, mit einer Reihe von Zangen oder Klemmen, die unabhängig von linearen Synchron-Induktionsmotoren angetrieben werden, wobei der Satz von Zangen/Klemmen auf divergierenden Streckschienen gleitet; die linearen Synchron-Induktionsmotoren werden mit Wechselströmen versorgt, deren Phasen und Frequenzen so moduliert sind, dass die Zangen/Klemmen einem vorprogrammierten linearen Geschwindigkeitsprofil folgen, um die gewünschten Streckverhältnisse in MD zu erhalten;

wobei die MD-Streckverhältnisse eine Funktion des linearen Längsgeschwindigkeitsprofils sind und die TD-Streckverhältnisse durch den Abstand/Divergenz zwischen den Streckschienen geregelt werden;

- der für die Folienstreckschritte verwendete Streckrahmen einen oder mehrere Abschnitte in einem Ofen mit Temperaturen zwischen 145 °C und 175 °C umfasst;
- wobei die MD-Längsstreckverhältnisse von 4:1 bis 9:1 und die TD-Querstreckverhältnisse von 3:1 bis 8:1 liegen.
- Endthermofixieren in TD, das durch Zusammenführen der Streckschienen in einem oder mehreren Abschnitten des Streckrahmens bei Temperaturen von 135 °C -160 °C ausgeführt wird.

**20.** Verfahren nach Anspruch 19, wobei die MD-Streckverhältnisse von 5,5: 1 bis 7:1 liegen.

**21.** Verfahren zum Aufbringen auf Behälter der Etiketten der Kunststofffolien der Ansprüche 1 bis 18, umfassend die folgenden Schritte:

- Abwickeln in MD-Richtung der mehrschichtigen Kunststoff-Folienrolle;
- Trennen der Folie auf die Größe, um Etiketten zu erhalten;
- Aufbringen von Schmelzklebebändern auf der dem Behälter zugewandten Seite des Etiketts jeweils an der Vorderkante bzw. der Hinterkante des Etiketts in MD, wobei die Klebebänder parallel zur vertikalen Achse des Behälters sind, wobei der Behälter eine konvexe Seitenfläche und einen kreisförmigen horizontalen Querschnitt mit einem entlang der vertikalen Achse veränderlichen Durchmesser aufweist,
- Aufbringen des Klebeetiketts auf die konvexe Seitenfläche des Behälters mit einem Krümmungsradius größer als 74 mm am Bereich, in dem die obere Kante des Etiketts aufgebracht ist, und größer als 72 mm am Bereich, in dem die untere Kante des Etiketts aufgebracht ist, wobei die Etikettenhöhe, bestimmt entlang der vertikalen Achse des Behälters, 60 mm beträgt und der Abstand zwischen der unteren Kante des Etiketts und dem Boden des Behälters von 12 bis 14 mm beträgt, wobei der Schmelzkleber mittels einer Wärmezuführvorrichtung aktiviert wird;
- Warmschrumpfen des Etiketts, indem der etikettierte Behälter in einem Schrumpftunnel bei einer Temperatur von 60 °C bis 300 °C durchgeleitet wird, wodurch eine haftende Etikettierung am Behälter erreicht wird und der konvexen Seitenfläche des Behälters entspricht;

wobei die Etikettieranlage mit einer Geschwindigkeit von 8.000 bis 75.000 Behältern/Stunde arbeitet.

**Revendications**

1. Utilisation destinée à préparer des étiquettes pour des applications à amenage à rouleaux d'un film multicouche thermorétractable uniaxial, comprenant au moins trois couches, dans laquelle :

   - le noyau comprend

      le composant a) sélectionné à partir de

         a1) polypropylène isotactique cristallin et/ou
         a2) un copolymère cristallin de propylène avec de l'éthylène,

      le composant b) sélectionné à partir de

         b1) polypropylène atactique amorphe et/ou
         b2) un copolymère de propylène-éthylène amorphe avec au moins un alpha-oléfine comportant de 4 à 12 atomes de carbone dans laquelle, en % en poids par rapport à la quantité totale de monomères, la quantité d'éthylène et d'alpha-oléfine est comprise entre 1 et 15 %, d'éthylène entre 0 et 10 %, d'alpha-oléfine entre 1 et 15 % ;

      la quantité de composant additif b), b1) + b2) en parties en poids pour 100 parties en poids de composant a) étant comprise entre 3 et 12, la quantité (parties en poids) de composant b1) est comprise entre 0 et 12, celle du composant b2) est comprise entre 0 et 12 ;
      - les couches externes comprennent un copolymère de propylène avec de l'éthylène et au moins un alpha-oléfine en $C_4$-$C_{12}$ dans laquelle, en % en poids par rapport à la quantité de monomères, la quantité d'éthylène et d'alpha-oléfine est comprise entre 6 et 25 %, d'éthylène l'étant entre 1 et 5 %, l'alpha-oléfine entre 5 et 25 % ;

   le film pouvant être obtenu par étirage biaxial simultané au moyen de moteurs synchronisés linéaires, la thermorétraction en MD étant comprise entre 8 et 17 % et étant $\leq$2 en TD, ces valeurs sont déterminées par l'essai de thermorétraction OPMA TC 4 (Association des fabricants de polypropylène orienté) (130 °C - 5 minutes dans l'air) ; l'épaisseur du film multicouche étant comprise entre 25 et 35 $\mu$m ; l'épaisseur de chaque couche externe étant comprise entre 0,5 et 1,5 $\mu$m ;
   le rendement de film, défini comme étant le rapport entre le [poids de film produit en rouleaux]/le [poids de matières premières utilisé pour la production de film] étant $\geq$ 95 % ;
   les déchets sur la ligne d'application des étiquettes étant $\leq$ 0,5 % ;
   dans laquelle le processus d'application des étiquettes comprend les étapes suivantes :

      - déroulement dans la direction MD du rouleau de film plastique multicouche ;
      - découpage à dimension du film pour obtenir des étiquettes ;
      - application d'un adhésif thermofusible sur le côté de l'étiquette faisant face au récipient, en correspondance, respectivement, du bord d'attaque et du bord de fuite de l'étiquette dans la direction MD, le récipient comportant une surface latérale convexe et une section horizontale circulaire ayant un diamètre variable le long de l'axe vertical,
      - application de l'étiquette rendue adhésive sur la surface latérale convexe du récipient ayant un rayon de courbure supérieur à 74 mm en correspondance de la zone dans laquelle le bord supérieur de l'étiquette est appliqué et supérieur à 72 mm en correspondance de la zone dans laquelle le bord inférieur de l'étiquette est appliqué, la hauteur de l'étiquette, déterminée le long de l'axe vertical du récipient étant de 60 mm et la distance entre le bord inférieur de l'étiquette et la base du récipient étant de 12-14 mm, l'adhésif thermofusible étant activé au moyen d'un dispositif de distribution de chaleur ;
      - thermorétraction de l'étiquette en passant le récipient étiqueté dans un tunnel de thermorétraction à une température comprise entre 60 et 300 °C, afin d'obtenir un étiquetage adhérant au récipient et conforme à la surface latérale convexe du récipient ;

   la ligne d'application d'étiquettes fonctionnant à une vitesse comprise entre 8 000 et 75 000 récipients/heure.

**2.** Utilisation selon la revendication 1, dans laquelle le film comporte trois couches.

**3.** Utilisation selon les revendications 1-2, dans laquelle comme composant a), un composant de polypropylène isotactique cristallin a1) est utilisé.

**4.** Utilisation selon la revendication 3, dans laquelle comme composant b), un composant de polypropylène atactique amorphe b1) est utilisé.

**5.** Utilisation selon les revendications 1-4, dans laquelle le composant de copolymère de propylène-éthylène a2) du noyau a une teneur en éthylène (% en poids) comprise entre 0,3 et 10%.

**6.** Utilisation selon les revendications 1-5, dans laquelle le composant a2) du noyau comprend un alpha-oléfine dans une quantité (% en poids) comprise entre 0 et 20 %.

**7.** Utilisation selon les revendications 1-6, dans laquelle dans le composant b2), la quantité de comonomères en % en poids sur la quantité totale de monomères est comprise entre 2 et 10 %, la quantité d'éthylène entre 1 et 5 %, l'alpha-oléfine comporte entre 4 et 8 atomes de carbone et la quantité d'alpha-oléfine est comprise entre 2 et 10 %.

**8.** Utilisation selon les revendications 1-7, dans laquelle la quantité de composant additif b) dans le noyau, exprimée en parties en poids/100 parties en poids de composant a), est comprise entre 4 et 10.

**9.** Utilisation selon les revendications 1-8, dans laquelle dans le copolymère de propylène des couches externes, l'alpha-oléfine comporte de 4 à 8 atomes de carbone.

**10.** Utilisation selon les revendications 1-9, dans laquelle les alpha-oléfines des copolymères a2) et b2) du noyau et des copolymères des couches externes sont sélectionnés à partir du butène, de l'hexène et de l'octène.

**11.** Utilisation selon les revendications 1-10, dans laquelle les couches externes sont égales l'une à l'autre.

**12.** Utilisation selon les revendications 1-11, dans laquelle une des couches externes est soumise à un traitement de surface.

**13.** Utilisation selon la revendication 12, dans laquelle les couches externes comprennent des composants sélectionnés à partir d'agents de glissance, d'agents antiadhérents, d'opacifiants et le noyau comprend des agents antistatiques, des colorants.

**14.** Utilisation selon les revendications 1-13, dans laquelle la thermorétraction du film en MD est comprise entre 10 et 14 % et est ≤1 % en TD.

**15.** Utilisation selon les revendications 1-14, dans laquelle le rayon de courbure de la surface latérale du récipient en correspondance de la zone dans laquelle le bord supérieur de l'étiquette est appliqué est supérieure à 75 mm et en correspondance de la zone dans laquelle le bord inférieur de l'étiquette est appliqué est supérieur à 73 mm.

**16.** Utilisation selon les revendications 1-15, dans laquelle l'épaisseur du film multicouche est comprise entre 28 et 32 μm.

**17.** Utilisation selon les revendications 1-16, dans laquelle l'épaisseur du film multicouche est de 30 μm.

**18.** Utilisation selon les revendications 1-17, dans laquelle les déchets sur la ligne d'application des étiquettes sont ≤0,1%.

**19.** Procédé de fabrication d'un film multicouche selon les revendications 1-18 comprenant les étapes suivantes :

- coextrusion d'une plaque multicouche comportant une épaisseur comprise entre 0,5 et 4 mm sur une tête d'extrudeuse plate ;
- refroidissement de la plaque sur la surface d'un rouleau refroidisseur refroidi en l'immergeant dans un bain d'eau à une température comprise entre 5 et 35 °C ;
- chauffage de la plaque par une unité à rayons infrarouges dans laquelle la température de la surface des panneaux infrarouges est comprise entre 100 et 500 °C;
- étirage et orientation de la plaque par un processus d'orientation simultanée en maintenant les bords de la plaque, ayant une épaisseur supérieure que la plaque, avec une série de pinces/brides de serrage indépendamment entraînées par des moteurs asynchrones synchronisés linéaires, l'ensemble de pinces/brides de serrage coulissant sur des rails d'étirage divergents ; les moteurs asynchrones synchronisés linéaires étant alimentés par des courants alternatifs dont les phases et les fréquences sont modulées de manière à ce que les pinces/brides de serrage suivent une vitesse linéaire préprogrammée pour obtenir les rapports d'étirage requis en MD ;

dans lequel les rapports d'étirage en MD sont fonction du profil de la vitesse linéaire longitudinale et les rapports d'étirage en TD sont réglés par la distance/divergence entre les rails d'étirage ;

- le châssis d'étirage utilisé pour les étapes d'étirage du film comprend une ou plusieurs sections à l'intérieur d'un four ayant des températures comprises entre 145 et 175 °C ;
- les rapports d'étirage longitudinal en MD étant compris entre 4:1 et environ 9:1 et les rapports d'étirage transversal en TD entre 3:1 et 8:1;
- réglage de la température finale en TD effectué en utilisant la convergence des rails d'étirage dans une ou plusieurs sections du châssis d'étirage à des températures comprises entre 135 et 160 °C.

**20.** Procédé selon la revendication 19, dans lequel les rapports d'étirage en MD sont compris entre 5.5: 1 à 7:1.

**21.** Procédé pour l'application sur des récipients d'étiquettes de films plastiques selon les revendications 1-18, comprenant les étapes suivantes :

- déroulement en MD du rouleau de film plastique multicouche ;
- découpage à dimension du film pour obtenir des étiquettes ;
- application de bandes adhésives thermofusibles sur le côté de l'étiquette faisant face au récipient, en correspondance, respectivement, du bord d'attaque et du bord de fuite de l'étiquette dans la direction MD, lesdites bandes adhésives étant parallèles à l'axe vertical du récipient, le récipient comportant une surface latérale convexe et une section horizontale circulaire ayant un diamètre variable le long de l'axe vertical,
- application de l'étiquette rendue adhésive sur la surface latérale convexe du récipient comportant un rayon de courbure supérieur à 74 mm en correspondance de la zone dans laquelle le bord supérieur de l'étiquette est appliqué et supérieur à 72 mm en correspondance de la zone dans laquelle le bord inférieur de l'étiquette est appliqué, la hauteur de l'étiquette, déterminée le long de l'axe vertical du récipient étant de 60 mm et la distance entre le bord inférieur de l'étiquette et la base du récipient étant de 12-14 mm, l'adhésif thermofusible étant activé au moyen d'un dispositif de distribution de chaleur ;
- thermorétraction de l'étiquette en passant le récipient étiqueté dans un tunnel de thermorétraction à une température comprise entre 60 et 300°C, afin d'obtenir un étiquetage adhérant au récipient et conforme à la surface latérale convexe du récipient ;

la ligne d'application d'étiquettes fonctionnant à une vitesse comprise entre 8 000 et 75 000 récipients/heure.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1074593 A
- EP 1862518 A
- WO 962386 A
- EP 2599628 A
- US 4853602 A
- US 5051225 A